# EUROPÄISCHE PATENTSCHRIFT

(11) **EP 1 075 110 B1**
(45) Veröffentlichungstag und Bekanntmachung des Hinweises auf die Patenterteilung: **21.12.2005**
(21) Anmeldenummer: 00116363.3
(22) Anmeldetag: 28.07.2000
(51) Int. Cl.: H04L 12/403, H04L 12/413, G05B 19/418

(54) **Kombiniertes Master/Slave-Producer/Consumer-Kommunikations-verfahren für ein Netzwerk**
Combined master/slave-producer/consumer communication method for a network
Procédé combiné maître/esclave-producteur/utilisateur pour un réseau

(30) Priorität: 28.07.1999 DE 19935490
(43) Veröffentlichungstag der Anmeldung: 07.02.2001
(73) Patentinhaber: PHOENIX CONTACT GmbH & Co. Kg, 32825 Blomberg (DE)
(72) Erfinder: Jasperneite, Jürgen, Dipl.-Ing., 32839 Steinheim (DE)
(74) Vertreter: Blumbach - Zinngrebe

(56) Entgegenhaltungen:
- EP-A- 0 344 035
- DEMARTINI C ET AL: "Real-time communication in the factory automation" SIGNAL PROCESSING AND SYSTEMS CONTROL, INTELLIGENT SENSORS AND INSTRUMENTATION. SAN DIEGO, NOV. 9 - 13, 1992, PROCEEDINGS OF THE INTERNATIONAL CONFERENCE ON INDUSTRIAL ELECTRONICS,CONTROL, INSTRUMENTATION AND AUTOMATION (IECON), NEW YORK, IEEE, US, Bd. 3 CONF. 18, 9. November 1992 (1992-11-09), Seiten 772-777, XP010060623 ISBN: 0-7803-0582-5
- WILLIG A: "A MAC protocol and a scheduling approach as elements of a lower layers architecture in wireless industrial LANs" FACTORY COMMUNICATION SYSTEMS, 1997. PROCEEDINGS. 1997 IEEE INTERNATIONAL WORKSHOP ON BARCELONA, SPAIN 1-3 OCT. 1997, NEW YORK, NY, USA,IEEE, US, 1. Oktober 1997 (1997-10-01), Seiten 139-148, XP010255537 ISBN: 0-7803-4182-1

## Beschreibung

Die Erfindung betrifft die Bereitstellung einer Kommunikation in einem Netzwerk, welches ein gemeinsames Übertragungsmedium mit Mehrfachzugriff aufweist.

In der Kommunikationstechnik werden heute eine Vielzahl von speziellen, auf vorgegebene Aufgaben optimierte Informationsübertragungssysteme verwendet. Beispielsweise haben sich in der Automatisierungstechnik Feldbussysteme durchgesetzt, bei welchen die am Produktionsprozeß beteiligten Geräte über Kopplungseinrichtungen an das Automatisierungsnetzwerk angeschlossen sind. Der Informationsaustausch in derartigen Systemen wird zum Beispiel durch ein Master/Slave-Verfahren realisiert, bei welchem nur ein einzelner Teilnehmer als Master den Bus aktiv belegen darf, während den anderen Busteilnehmern als Slaves nur nach Aufforderung durch den Master ein Buszugriff gewährt wird. Ein derartiges Übertragungsverfahren weist den Vorteil auf, dass das zeitliche Verhalten des Systems durch die Abschrankbarkeit der Datenzustellzeit determiniert ist und somit das System eine Echtzeitfähigkeit aufweist. Diese ist insbesondere in heutigen Automatisierungsanlagen notwendig, um beispielsweise auch regelungstechnische Größen über den gemeinsamen Bus übermitteln zu können. Beispielhafte Feldbussysteme mit Master/Slave-Übertragungsverfahren sind der INTERBUS und der ProfiBus, die durch EN 50254 bzw. EN 50170 festgelegt sind.

Im Gegensatz dazu werden in der Automatisierungstechnik in Fällen, die keine Echtzeitfähigkeit erfordern, auch Netzwerke und Kommunikationstechniken verwendet, die ein gemeinsames Übertragungsmedium mit Mehrfachzugriff und dynamischer Zuordnung des Übertragungsmediums aufweisen. Hierbei können alle Teilnehmer auf das Übertragungsmedium aktiv zugreifen, was insbesondere zu Kollisionen führen kann, welche die Nichtvorherbestimmbarkeit der Datenzustelltzeit für eine Nachrichtenübermittlung über das Medium zur Folge haben. Als Beispiel seien das ALOHA-Protokoll und das CSMA-Protokoll genannt, die von der Gleichberechtigung aller Busteilnehmer in Bezug auf einen Buszugriff ausgehen. Die auftretenden Kollisionen und die nachfolgenden Prozeduren zur Behebung der Kollisionen verhindern damit den Einsatz bei Echtzeitaufgaben. Andererseits weisen diese Übertragungstechniken den Vorteil auf, dass das Übertragungsmedium je nach Bedarf von den entsprechenden Teilnehmern genutzt werden kann und nicht Übertragungskapazitäten durch eine statische Kanalzuordnung brachliegen und nicht genutzt werden können, wie es beispielsweise beim statischen FDM-Verfahren (Frequenzmultiplex-Verfahren) im allgemeinen der Fall ist.

Die genannten Mehrfachzugriffsverfahren weisen weiterhin den Vorteil auf, dass mit ihnen neben einer Unicast-Übertragung, bei welcher Daten an einen einzelnen Empfänger gesendet werden, auch mittels einer Multicast- oder einer Broadcast-Übertragung Information gleichzeitig zu mehreren Teilnehmern übertragen werden kann.

In dieser Hinsicht besteht bei den ersterwähnten Echtzeit-Feldbussystemen häufig der Bedarf, eine Datenverbindung zwischen einzelnen Slaves zu realisieren, was mit den bestehenden Systemen nur indirekt über den Master realisiert werden kann, welcher dabei eine Kopierfunktion übernimmt. Dabei kopiert der Master Eingangsdaten, welche er von einem Slave erhalten hat, in den Ausgangsdatenstrom, um die betreffenden Daten anderen Slaves zur Verfügung zu stellen.

Der Artikel Dermatini et al. Real-Time communication in the factory Automation, IEEE, US, Bd. 3 Conf. 18, Seite 772-777, XP01006060623, ISBN 0-7803-0582-5 zeigt ein Kommunikationsverfahren in der Automatisierungstechnik.

Dabei ist einen an einen Bus angeschlossenen Arbiter vorgesehen, die über ein Identifizierungssignal an den Bus angeschlossene Teilnehmer zum Senden auffordert. Der angeschlossene Teilnehmer fungiert demzufolge als Slave und kann nur Daten senden, wenn der Arbiter ihn dazu aufgefordert hat. Informationen werden in festgesetzten Zyklen versendet.

Die EP 03 44 035 beschreibt ein Übertragungsnetz zur Übertragung von numerischen Informationen zwischen mehreren Stationen. Hierbei können die Stationen gemäß dem CSMA/CD-Protokoll Zugriff auf ein gemeinsames Übertragungsmedium erwerben, wobei Kollisionen aüftreten können, wenn mehrere Stationen gleichzeitig Daten übertragen wollen.

Um Kollisionen grundsätzlich auszuschalten, unterstützt dieses Netz auch einen Master/Slave-übertragungsmodus, bei dem wenigstens einer der Teilnehmer als Master und die übrigen als Slave fungieren und nur Daten senden dürfen, wenn sie eine individuelle Aufforderung vom Master erhalten haben.

Aufgabe der Erfindung ist es damit, eine echtzeitfähige Datenkommunikation bereitzustellen, welche die Möglichkeit einer Multi- und/oder Broadcast-Datenübertragung bietet.

Dies löst die Erfindung mit einem Verfahren mit den Merkmalen des Anspruchs 1 bzw. einer Vorrichtung mit den Merkmalen des Anspruchs 11 gelöst. Weiterbildungen der Erfindung sind in den Unteransprüchen angegeben.

Vorteilhafterweise werden für die Bereitstellung einer Kommunikation in einem Netzwerk, bei welchem ein Mehrfachzugriffsprotokoll mit dynamischer Kanalzuordnung eingesetzt wird und die Möglichkeit von Multicastbeziehungsweise Broadcast-Übertragungen aufweist, Mehrfachzugriffsprotokoll-Dienste von einer Instanz zur Realisierung eines Master/Slave- Übertragungsverfahrens in Anspruch genommen.

Damit wird das für Feldbusse übliche Master/Slave-Verbindungsverfahren auf die gerade in LAN-Netzwerken anzutreffenden Protokolle zum Beispiel IEEE 802 abgebildet und somit erreicht, dass mit dem erfindungsgemäßen Verfahren die Vorteile einer Master/Slave-Verbindung und die Vorteile einer Mehrfachzugriffs- und Multicast-Verbindung gleichzeitig ausgenutzt werden können.

Die Erfindung läßt sich vorteilhafterweise auf alle Mehrfachzugriffsprotokolle mit der Möglichkeit einer Broadcast-Übertragung anwenden, beispielsweise auf ALOHA-Protokolle, auf CSMA (Carrier Sense Multiple Access)-Protokolle und insbesondere auch auf die CSMA/CD (Carrier Sense Multiple Access/Collision Detection)-Protokolle, wovon die Variante IEEE 802.3 beispielhaft genannt ist. Das erfindungsgemäße Verfahren läßt sich weiterhin auch auf das Token-Ring- und das Token-Bus-Verfahren gemäß IEEE 802.4 bzw. IEEE 802.5 übertragen. Allen genannten Protokollen ist gemein, dass im Datenrahmen als Zieladresse Gruppen von Teilnehmern angegeben werden können, womit eine Multicast-Übertragung möglich ist. In ähnlicher Weise kann durch Eintragen eines vorgegebenen Wertes als Zieladresse erreicht werden, dass der Datenrahmen von allen Teilnehmern des LAN's (Local Area Network) empfangen werden. Es ist jedoch zu bemerken, dass die Erfindung auch bei MAN's (Metropolitan Area Network) oder WAN's (Wide Area Network) ausgenutzt werden kann.

Die Anwendung auf Ethernet-Netzwerke (IEEE 802.3) hat weiterhin den großen Vorteil, dass derartige Netzwerke in großer Anzahl installiert und somit entsprechende Hardware-Komponenten nicht kostenintensiv sind. Um eine strikte Trennung und damit Unabhängigkeit des implementierten Master/Slave-Protokolls sicherzustellen, können die Instanzen zur Realisierung des Master/Slave- Protokolls in einem Application-Layer-Interface (ALI) angeordnet sein. Demnach können die Prozeduren und Funktionen, welche von den Master/Slave-Protokoll-Diensten in Anspruch genommen werden, ungeändert bleiben, so dass insbesondere bei den unteren Schichten des Protokollstapels nach dem OSI-Referenzmodell keine Veränderungen vorgenommen werden müssen.

Um die Echtzeitfähigkeit des erfindungsgemäßen Verfahrens sicherzustellen, kann eine einzelne Master/Slave-Verbindung aus mehreren Daten-Übertragungen innerhalb eines einzelnen Zyklus bestehen. Die Zeitdauer eines derartigen einzelnen Zyklus bestimmt somit die obenstehend erwähnte Abschrankbarkeit der Datenzustellzeit. Zur Synchronisation aller Teilnehmer einer Master/Slave-Verbindung kann der Master mittels eines Synchronisationstelegramms an alle beteiligten Slaves eine den Zyklus kennzeichnende Information übertragen. Durch die Verwendung dieser den Zyklus kennzeichnende Information bei der Erstellung des Antworttelegramms durch den Slave, ist sowohl für die anderen Slaves als auch für den Master die Zuordnung des Telegramms zu einem bestimmten Zyklus angezeigt und bestimmt. Zur Projektierung eines Verbindungs-Zyklus kann der Master entsprechende Projektierungstelegramme an die in dem Zyklus beteiligten Slaves verwenden. Zur Vereinfachung des Vorgangs und zum Zwecke der Zeiteinsparung kann dabei die Projektierung und die Synchronisation für einen bestimmten Zyklus zusammen in einem einzelnen Schritt für einen bestimmten Slave erfolgen.

Sendet ein Slave im Rahmen eines Zyklus sein Antworttelegramm als Broadcast oder Multicast, so wird auf diese Weise eine Querkommunikation zwischen Slaves bereitgestellt, ohne dass der Master zum Weiterleiten der Daten notwendig ist. Das Prinzip der Erfindung läßt sich auf eine alle von Mehrfachzugriffsprotokolle, welche die Möglichkeit einer Multi- beziehungsweise Broadcast-Übertragung aufweisen. Beispielsweise können die Instanzen des Application-Layer-Interface (ALI) sowohl die Dienste der UDPals auch der TCP-Komponente der TCP/IP-Protokollfamilie oder auch die Dienste des IEEE 802.3-Protokoll direkt zur Realisierung einer Master/Slave-Verbindung in Anspruch nehmen, so dass letztlich ein kombiniertes Master/Slave-Producer/Consumer-Übertragungsverfahren bereitgestellt werden kann.

Das Verfahren kann vorteilhafterweise derartig eingestellt werden, dass in Echtzeit einer der Teilnehmer des Netzwerkes als Master und die anderen als Slaves projektiert werden, was die Flexibilität des Netzwerkes drastisch erhöht.

Die Erfindung wird im folgenden durch das Beschreiben einiger Ausführungsformen unter Zugrundelegung der Zeichnungen erläutert, von denen
- Figur 1: einen Ausschnitt eines beispielhaften Netzwerkes zur Ausführung der Erfindung zeigt, und
- Figur 2: schematisch die Protokollstapel zweiter Teilnehmer zeigt, zwischen welchen Informationen gemäß der Erfindung ausgetauscht werden, und
- Figur 3: das Interaktionsdiagramm für einen vollständigen Zyklus eines erfindungsgemäßen Übertragungsverfahren darstellt.

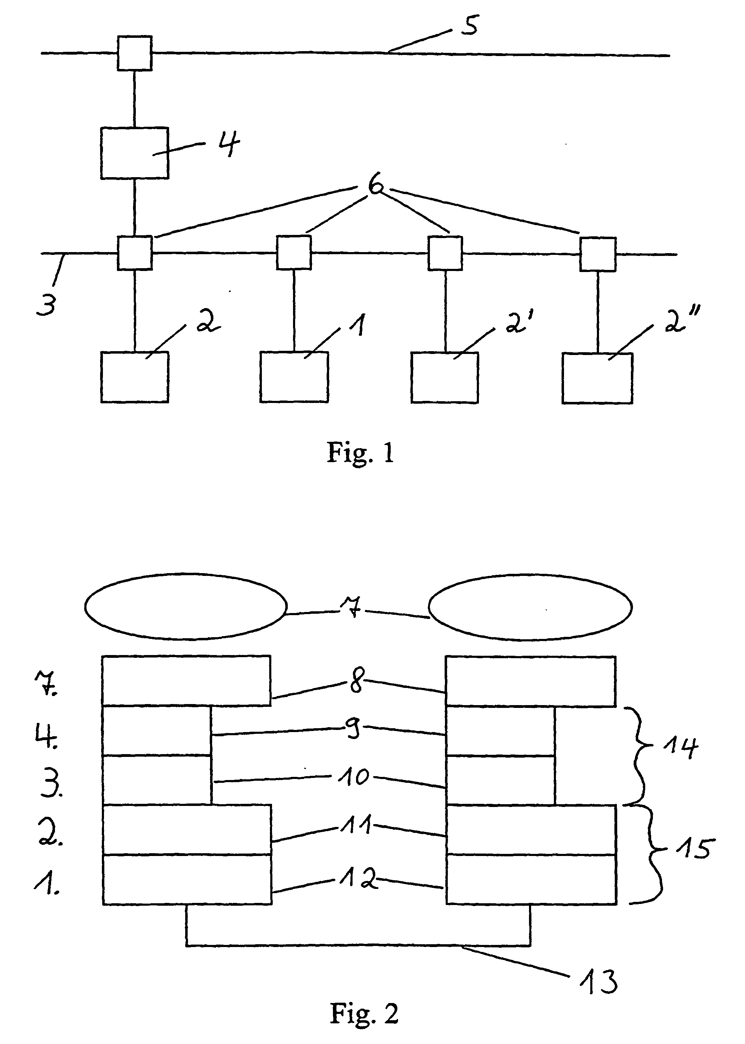

Figur 1 zeigt im Ausschnitt ein beispielhaftes Netzwerk zur Ausführung des erfindungsgemäßen Kommunikationsverfahrens. Slaves 2, 2', 2'' sind zusammen mit einem Master 1 über Netzkoppeleinrichtungen 6 in Form von Hubs oder Switches an das Netzwerksegment 3 angeschlossen. Das Segment 3 ist als LAN ausgeführt und über eine Bridge 4 an ein weiteres LAN 5 angeschlossen, das ein Standard-Ethernet-Netzwerk gemäß IEEE 802.3 ist.

Alle Busteilnehmer in Segment 3 weisen ein Application-Layer-Interface 8 (ALI) auf (s. Fig. 2), wobei nur einer der Busteilnehmer des Segments als Master 1 projektiert sein darf. Die Projektion kann dabei je nach Ausführungsform entweder voreingestellt sein oder auch während des Betriebs wechseln. Sie wird durch eine Softwarekomponente im ALI festgelegt, wobei das ALI auch Hardware-Komponenten aufweist.

Die Kommunikation zwischen einzelnen Busteilnehmern des Segments 3 wird durch Bezugnahme auf Figur 2 erläutert. Dort sind zwei Kommunikationsprotokoll-Stapel nach dem OSI-Referenzmodell gezeigt, die zwei Teilnehmern des Segmentes zugeordnet sind, welche über das Übertragungsmediums 13 miteinander kommunizieren. Auf der linken Seite sind die jeweiligen Protokolle den bestimmten Schichten des Referenzmodells zugeordnet. Die Bit-Übertragungsschicht 12 als ersten Schicht und die Sicherungsschicht 11 als zweite Schicht sind gemäß der Ethernet-Norm IEEE 802.3 ausgebildet. Insbesondere legt die MAC (Medium Access Control)-Teilschicht der Sicherungsschicht Mehrfachzugriffe nach dem CSMA/CD-Protokoll fest. In der siebten Schicht des OSI-Referenzmodells ist erfindungsgemäß ein Application Layer Interface (ALI) 8 angeordnet. Dieses ALI sorgt dafür, dass die darunterliegenden Dienste der ersten Schicht (12) und zweiten Schicht (11) direkt derartig aufgerufen werden, dass eine Master/Slave-Verbindung realisiert ist, wobei durch die Eigenschaft des Netzwerks damit ein kombiniertes Master/Slave- Producer/Consumer-Übertragungsverfahren bereitgestellt wird. Die Ethernet-IEEE 802.3-Komponenten sind in der Fig. 2 zusammen mit 15 bezeichnet.

Im Gegensatz dazu kann in einer weiteren Ausführungsform der Erfindung das ALI die Dienste einer IP- (10) und die UDP-Komponenten (9) der TCP/IP-Protokollfamilie in Anspruch nehmen, um eine Master/Slave-Verbindung zu realisieren, s. Fig. 2.

Weiterhin wird in einer weiteren, nicht dargestellten Ausführungsform die UDP-Komponente durch die TCP-Komponente ersetzt.

In allen Fällen weisen alle Teilnehmer des Netzes die gleichen Protokollkomponenten auf.

In allen Ausführungsbeispielen wird die Erfindung durch entsprechende Ansteuerung der unter dem ALI liegenden Instanzen und Prozeduren der verschiedenen Protokolle realisiert. Hierbei wird das kombinierte Master/Slave-Producer/Consumer-Kommunikationsverfahren in den beschriebenen Ausführungsformen dadurch erreicht, dass innerhalb eines projektierten Zyklus Daten zwischen den projektierten Teilnehmern des Zyklus ausgetauscht werden. Dabei werden die zu transportierenden Daten vom Anwenderprogramm 7 an die ALI-Schicht weitergegeben beziehungsweise erhält das Anwenderprogramm die Daten vom ALI.

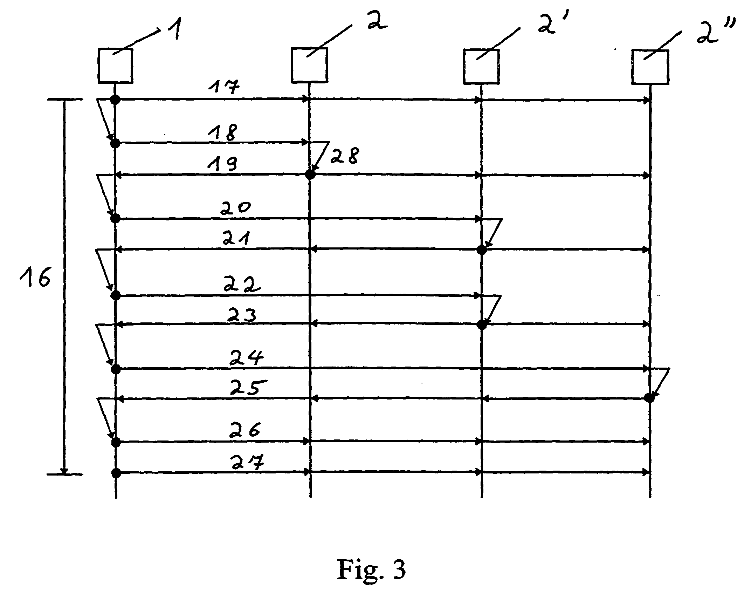

Ein Beispiel eines derartigen Zyklus ist in Figur 3 in Form eines Interaktionsdiagramms dargestellt. Die vor Beginn des Zyklus notwendige Adressierung und Konfiguration der eingebundenen Teilnehmer wird mittels einer Projektierung durch den Master 1 realisiert. Dabei sendet der Master im allgemeinen in Form eines Unicasts zu jedem Slave 2, 2', 2'' eine Liste von Kommunikationsbezügen für den nächsten Zyklus, welcher eine Vielzahl von Einzelübertragungen zwischen dem Master 1 und den Slaves 2, 2', 2'' umfassen kann. Zu Beginn des Zyklus 16 sendet der Master 1 ein Synchronisationstelegramm 17, welches durch einen Broad- oder Multicast zumindest an alle an dem Zyklus 16 beteiligten Slaves übermittelt wird. Da Schicht 1 und 2 nach dem OSI-Referenzmodell gemäß der Ethernet-Norm IEEE 802.3 ausgebildet sind, läßt sich ein derartiger Broad- oder Multicast durch entsprechende Angabe des Ziels im Telegramm-Header realisieren. Das Synchronisationstelegramm umfaßt ein Datum, welches den bestimmten Zyklus identifiziert. Im beschriebenen Beispiel ist dieses Datum eine Zyklusnummer, welche durch den Master 1 für die Identifikation eines neuen Zyklus inkrementiert wird. Alle Slave-Teilnehmer 2, 2', 2'' speichern die übertragene Zyklusnummer und stellen ihre Sendedaten bereit. Diese Daten werden von den Slaves sequenziell über das Übertragungsmedium 13 zum Master 1 bzw. zu anderen Slaves übertragen, die Teilnehmer des betreffenden Zyklus sind. Dies bedeutet, dass die einzelnen Slaves ihre Daten zu unterschiedlichen Zeitpunkten übermitteln. Um eine Echtzeit-Kommunikation zu ermöglichen, senden die Slaves zusätzlich zu ihren Daten die jeweilige Zyklusnummer, so dass der Zeitpunkt, an welchem die Daten von den Slaves erhoben wurden, feststeht und für alle Slaves gleich ist. Im vorliegenden Beispiel sendet der Master ein Aufruftelegramm 18 in Form eines Unicasts an Slave 2, welcher nach einer Verarbeitungszeit 28 seine Daten mittels eines Antwort-Telegramms 19 mit den zuvor bereitgestellten Sendedaten und der empfangenen Zyklusnummer zum Master 1 und zu den anderen Slaves 2', 2' in Form eines Broadcasts. Mit Hilfe der Zyklusnummer im Antwort-Telegramm 19 kann der Master 1 und die anderen Slave-Teilnehmer erkennen, dass es sich um gültige Daten des aktuellen Zyklus 16 handelt. Die Daten des Antwort-Telegramms liegen somit ohne Querverkehr über den Master direkt an anderen Slaves an, womit eine Producer/Consumer-Verbindung ohne Querverkehr hergestellt ist. Danach sendet der Master ein Aufruf-Telegramm 20 an Slave 2', der wiederum über eine Multicast-Übertragung mit einem Antwort-Telegramm 21 an den Master 1 und Slave 2'' übermittelt. Vorliegend ist Slave 2' so projektiert, dass er sein Antwort-Telegramm nicht an Slave 2 sendet.

Der Zyklus 22 beinhaltet danach ein weiteres Aufruf-Telegramm 22 an Slave 2', welcher diesmal mit einem Broadcast 23 an alle Slaves und den Master antwortet. Die Kommunikation des Master zum Slave 2'' erfolgt in gleicher Weise.

Der Zyklus 16 wird durch den Master 1 beendet, indem dieser ein weiteres Synchronisations-Telegramm 26 als Broad- oder Multicast an die beteiligten Slaves 2, 2', 2'' mit einer neuen Zyklusnummer überträgt. Die durch das letzte Synchronisations-Telegramm angesprochenen Slaves speichern wiederum die übertragene Zyklusnummer, stellen ihre Sendedaten bereit und geben die im vorangegangenen Zyklus 16 übertragenen Daten zur Weiterverarbeitung an die entsprechenden Anwendungen 7 (siehe Figur 2).

## Patentansprüche

1. Verfahren zur Bereitstellung einer Kommunikation zwischen mehreren Teilnehmern (1, 2, 2', 2") in einem Netzwerk, welches zumindest einen Mehrfachzugriffskanal, der dynamisch zugeordnet wird, aufweist, wobei einer der Teilnehmer als Master (1) und die anderen Teilnehmer (2, 2', 2'') als Slaves projektiert werden, **dadurch gekennzeichnet, daß** jedem Teilnehmer ein Standard-Mehrfachzugriffsprotokoll (9-12) mit der Fähigkeit einer Broadcast-Datenübertragung und eine dem Standard-Mehrfachzugriffsprotokoll überlagerte Master/Slave-Protokollinstanz zugeordnet wird, die das Aufrufen entsprechender Dienste des Standard-Mehrfachzugriffsprotokolls zur Ausführung eines Master/Slave-Übertragungsverfahrens steuert, und wobei ein Kommunikationszyklus die Schritte umfasst:
Senden eines Synchronisationstelegramms vom Master (1) an die beteiligten Slaves (2, 2', 2"), wobei in dem Synchronisationstelegramm zumindest eine den Kommunikationszyklus kennzeichnende Information übertragen wird,
Senden eines Aufruftelegramms vom Master (1) an einen beteiligten Slave (2) über einen Unicast-Aufruf,
Senden eines Antworttelegramms, welches die den Kommunikationszyklus kennzeichnende Information enthält, vom Slave (2) an den Master (1) und an die übrigen beteiligten Slaves (2', 2") im Broadcast-Modus.

2. Verfahren nach Anspruch 1,
**dadurch gekennzeichnet, dass**
die Prozeduren der Instanz eines Master/Slave- Protokolls in einem Application-Layer-Interface (8) ablaufen, die zwischen einer Anwendungsinstanz (7) und dem Standard-Mehrfachzugriffsprotokoll (9-12) angeordnet ist.

3. Verfahren nach Anspruch 1 oder 2,
**dadurch gekennzeichnet, dass**
ein Kommunikations-Zyklus die
Projektierung des Zyklus durch den Master umfasst.

4. Verfahren nach Anspruch 3,
**dadurch gekennzeichnet, dass**
Projektierung und Synchronisation eines Zyklus zusammen in einer Telegrammübertragung erfolgen.

5. Verfahren nach Anspruch 3 oder 4,
**dadurch gekennzeichnet, dass**
nach dem Erhalt des Antworttelegramms von einem projektierten Slave der Master innerhalb des Zyklus ein Aufforderungstelegramm an einen weiteren projektierten Slave sendet, der wiederum mit einem Telegramm antwortet.

6. Verfahren nach einem der vorstehenden Ansprüche,
**dadurch gekennzeichnet, dass**
der Master zum Abschluß des Zyklus und zum gleichzeitigen Beginn des nächsten Zyklus ein Synchronisationstelegramm sendet, wobei zumindest eine den nächsten Zyklus kennzeichnende Information übertragen wird, die sich von der des vorhergehenden Zyklus unterscheidet.

7. Verfahren nach einem der vorstehenden Ansprüche,
**dadurch gekennzeichnet, dass**
der Master zum Abschluß des Zyklus und zum gleichzeitigen Beginn des nächsten Zyklus diesen durch das Senden zumindest eines Telegramms projektiert.

8. Verfahren nach einem der vorstehenden Ansprüche,
**dadurch gekennzeichnet, dass**
das Mehrfachzugriffsprotokoll nach dem OSI-Schichtenmodell als MAC-Teilschicht der Sicherungsschicht und das ALI mit dem Master/Slave-Protokoll in der Verarbeitungsschicht angeordnet ist.

9. Verfahren nach einem der vorstehenden Ansprüche,
**dadurch gekennzeichnet, dass**
das Mehrfachzugriffsprotokoll ein CSMA-Protokoll, insbesondere ein CSMA/CD-Protokoll gemäß IEEE 802.3 oder IEEE 802.3u umfaßt.

10. Verfahren nach einem der Ansprüche 1 bis 11,
**dadurch gekennzeichnet, dass**
das ALI die Dienste einer UDP- oder einer TCP-Komponente der TCP/IP Protokollfamilie in Anspruch nimmt.

11. Steuer- und Datenübertragungsanlage, insbesondere zum Ausführen eines Verfahrens nach einem der Ansprüche 1 bis 10 umfassend
- Teilnehmer, welche jeweils über eine Kopplungseinrichtung an
- zumindest einen Informationsübertragungskanal angeschlossen sind, welcher ein Mehrfachzugriffskanal mit dynamischer Kanalzuordnung ist,
wobei einer der Teilnehmer als Master (1) und die übrigen Teilnehmer als Slaves (2. 2', 2") projektiert sind, **dadurch gekennzeichnet, dass** jedem Teilnehmer ein Application-Layer-Interface (8) zugeordnet ist, dass den Teilnehmern zum Koppeln an den Kanal (3) jeweils ein Standard-Mehrfachzugriffsprotokoll (9-12) mit der Fähigkeit einer Broadcast-Datenübertragung und eine dem Standard-Mehrfachzugriffsprotokoll überlagerte Master/Slave-Protokollinstanz zugeordnet sind, die das Aufrufen entsprechender Dienste des Standard-Mehrfachzugriffsprotokolls zur Ausführung eines Master/Slave-Übertragungsverfahrens steuert, dass die Prozeduren der Master/Slave-Protokollinstanz in dem Application-Layer-Interface (8) ablaufen, dass.
der Master (1) zum Senden eines Synchronisationstelegramms, welches eine einen Kommunikationszyklus kennzeichnende Information enthält, an die beteiligten Slaves (2, 2', 2") und zum Senden eines Aufruftelegramms an einen beteiligten Slave (2) über einen Unicast-Aufruf ausgebildet ist, und dass
jeder Slave zum Senden eines Antworttelegramms, welches die den Kommunikationszyklus kennzeichnende Information enthält, an den Master (1) und an die übrigen beteiligten Slaves im Broadcast - Modus ausgebildet ist.

12. Steuer- und Datenübertragungsanlage nach Anspruch 11,
**dadurch gekennzeichnet, dass**
der Informationsübertragungskanal (3) über eine Bridge an ein Standard-Ethernet-LAN angeschlossen ist.

## Claims

1. Method for providing a communication between a plurality of subscribers (1, 2, 2', 2") in a network which has at least one multi-access channel which is dynamically assigned wherein one of the subscribers is projected as the Master (1) and the other subscribers (2, 2', 2") as Slaves, **characterised in that**
a standard multi-access protocol (9 - 12) with a facility for broadcast data transmission and a Master / Slave protocol entity overlying the standard multi-access protocol are assigned to each subscriber, said Master / Slave protocol entity controlling the calling of corresponding services of the standard multi-access protocol for the purpose of carrying out a Master / Slave transmission process and wherein a communication cycle comprises the steps:
sending of a synchronisation telegram from the Master (1) to the subscribing Slaves (2, 2', 2") wherein at least one piece of information characterising the communication cycle is transmitted in the synchronisation telegram, sending of a calling telegram from the Master (1) to a subscribing Slave (2) through a Unicast call,
sending of a response telegram which contains the piece of information characterising the communication cycle from the Slave (2) to the Master (1) and to the other subscribing Slaves (2', 2' ') in broadcast mode.

2. Method according to claim 1,
**characterised in that**
the procedures of the entity of a Master / Slave protocol take place in an Application Layer Interface (8) which is arranged between an application entity (7) and the standard multi-access protocol (9 - 12).

3. Method according to claim 1 or 2,
**characterised in that**
a communication cycle comprises the projecting of the cycle by the Master.

4. Method according to claim 3,
**characterised in that**
projecting and synchronisation of a cycle take place together in a telegram transmission.

5. Method according to claim 3 or 4,
**characterised in that**
after receiving the response telegram from a projected Slave the Master sends within the cycle a request telegram to a further projected Slave who in turn responds with a telegram.

6. Method according to one of the preceding claims,
**characterised in that**
at the end of the cycle and at the simultaneous start of the next cycle the Master sends a synchronisation telegram wherein at least one piece of information characterising the next cycle is transmitted which differs from that of the preceding cycle.

7. Method according to one of the preceding claims,
**characterised in that**
at the end of the cycle and at the simultaneous start of the next cycle the Master projects same by sending at least one telegram.

8. Method according to one of the preceding claims,
**characterised in that**
the multi-access protocol is arranged according to the OSI layer model as a MAC sub-layer of the security layer and ALI with the Master / Slave protocol in the processing layer.

9. Method according to one of the preceding claims,
**characterised in that**
the multi-access protocol comprises a CSMA protocol, in particular a CSMA/CD protocol according to IEEE 802.3 or IEEE 802.3u.

10. Method according to one of the claims 1 to 11,
**characterised in that**
ALI uses the services of a UDP or a TCP component of the TCP/IP protocol family.

11. Control and data transmission installation, in particular for carrying out a method according to one of the claims 1 to 10, comprising:
- subscribers who are each connected by means of a coupling device to
- at least one information transmission channel which is a multi-access channel with dynamic channel assignment,
wherein one of the subscribers is projected as the Master (1) and the other subscribers are projected as Slaves (2, 2', 2"),
**characterised in that**
an Application Layer Interface (8) is assigned to each subscriber, **in that** for the purpose of coupling to the channel (3) a standard multi-access protocol (9 - 12) with a facility for broadcast data transmission and a Master / Slave protocol entity overlying the standard multi-access protocol are assigned to each of the subscribers, said Master / Slave protocol entity controlling the calling of corresponding services of the standard multi-access protocol for the purpose of carrying out a Master / Slave transmission process, **in that** the procedures of the Master / Slave protocol entity take place in the Application Layer Interface (8), **in that** the Master (1) is designed to send a synchronisation telegram which contains a piece of information characterising a communication cycle to the subscribing Slaves (2, 2', 2") and to send a calling telegram to a subscribing Slave (2) through a Unicast call, and **in that** each Slave is designed to send a response telegram which contains the information characterising the communication cycle to the Master (1) and to the other participating Slaves in broadcast mode.

12. Control and data transmission installation according to claim 11, **characterised in that**
the information transmission channel (3) is connected by means of a bridge to a standard Ethernet LAN.

## Revendications

1. Procédé d'établissement d'une communication entre plusieurs abonnés (1, 2, 2', 2") dans un réseau qui comporte au moins une voie d'accès multiple affectée de manière dynamique, l'un des abonnés étant programmé en tant que maître (1) et les autres abonnés (2, 2', 2") étant programmés en tant qu'esclaves, **caractérisé en ce qu'**à chaque abonné sont affectés un protocole d'accès multiple standard (9 à 12) capable de transmettre des données par diffusion générale et une instance de protocole maître / esclave (c'est-à-dire avec pilote) superposée au protocole d'accès multiple standard, laquelle commande l'appel de services appropriés du protocole d'accès multiple standard pour exécuter un procédé de transmission maître / esclave, un cycle de communication comprenant les étapes suivantes :
- envoi d'un télégramme de synchronisation du maître (1) aux esclaves participants (2, 2', 2"), au moins une information caractérisant le cycle de communication étant transmise dans le télégramme de synchronisation ;
- envoi d'un télégramme d'appel du maître (1) à un esclave participant (2) au moyen d'un appel à diffusion individuelle ;
- envoi, en mode diffusion générale, d'un télégramme de réponse contenant l'information caractérisant le cycle de communication, et ce de l'esclave (2) au maître (1) et aux esclaves participants restants (2', 2").

2. Procédé selon la revendication 1,
**caractérisé en ce que** les procédures de l'instance d'un protocole de transmission maître / esclave se déroulent dans une interface de couche d'application (8) qui est disposée entre une instance d'application (7) et le protocole d'accès multiple standard (9 à 12).

3. Procédé selon l'une des revendications 1 ou 2,
**caractérisé en ce qu'**un cycle de communication comprend la programmation du cycle par le maître.

4. Procédé selon la revendication 3,
**caractérisé en ce que** la programmation et la synchronisation d'un cycle ont lieu ensemble dans une transmission de télégramme.

5. Procédé selon la revendication 3 ou 4,
**caractérisé en ce que**, après réception du télégramme de réponse d'un esclave programmé, le maître envoie, au cours du cycle, un télégramme d'invitation à un autre esclave programmé, lequel répond à son tour par un télégramme.

6. Procédé selon l'une des revendications précédentes,
**caractérisé en ce que**, pour terminer le cycle et pour, en même temps, commencer le cycle suivant, le maître envoie un télégramme de synchronisation, auquel cas on transmet au moins une information caractérisant le cycle suivant qui est différente de celle du cycle précédent.

7. Procédé selon l'une des revendications précédentes,
**caractérisé en ce que**, pour terminer le cycle et pour, en même temps, commencer le cycle suivant, le maître programme celui-ci en envoyant au moins un télégramme.

8. Procédé selon l'une des revendications précédentes,
**caractérisé en ce que** le protocole d'accès multiple selon le modèle multicouche OSI est disposé sous forme de sous-couche de contrôle d'accès au support (MAC) faisant partie de la couche liaison de données et **en ce que** l'interface de couche application (ALI) avec le protocole de transmission maître / esclave est disposée dans la couche de traitement.

9. Procédé selon l'une des revendications précédentes,
**caractérisé en ce que** le protocole d'accès multiple comprend un protocole de transmission à détection de porteuse (CSMA), notamment un protocole de transmission à détection de porteuse et de collision (CSMA / CD) selon la norme IEEE 802.3 ou la norme IEEE 802.3u.

10. Procédé selon l'une des revendications 1 à 11,
**caractérisé en ce que** l'interface de couche application (ALI) recourt aux services d'un composant UDP ou TCP de la famille de protocoles TCP / IP.

11. Dispositif de commande et de transmission de données servant notamment à exécuter un procédé selon l'une des revendications 1 à 10 et comprenant :
- des abonnés qui sont chacun raccordés, par l'intermédiaire d'un dispositif de couplage, à
- au moins une voie de transmission d'information qui est une voie d'accès multiple à affectation dynamique de voie,
l'un des abonnés étant programmé en tant que maître (1) et les abonnés restants étant programmés en tant qu'esclaves (2, 2', 2"),
**caractérisé en ce qu'**une interface de couche d'application (8) est affectée à chaque abonné, **en ce qu'**un protocole d'accès multiple standard (9 à 12) capable de transmettre des données par diffusion générale et une instance de protocole maître / esclave superposée au protocole d'accès multiple standard, laquelle commande l'appel de services appropriés du protocole d'accès multiple standard pour exécuter un procédé de transmission maître / esclave, sont affectés à chacun des abonnés pour le couplage à la voie (3), **en ce que** les procédures de l'instance de protocole maître / esclave se déroulent dans l'interface de couche d'application (8), **en ce que** le maître (1) est conçu pour envoyer un télégramme de synchronisation qui contient une information caractérisant un cycle de communication aux esclaves concernés (2, 2', 2"), et pour envoyer un télégramme d'appel à un esclave concerné (2) au moyen d'un appel à diffusion individuelle, et
**en ce que** chaque esclave est conçu pour envoyer, en mode diffusion générale, un télégramme de réponse contenant l'information caractérisant le cycle de communication au maître (1) et aux esclaves concernés restants.

12. Dispositif de commande et de transmission de données selon la revendication 11,
**caractérisé en ce que** la voie de transmission d'information (3) est raccordée à un réseau local Ethernet standard par l'intermédiaire d'un pont.
